# EUROPEAN PATENT SPECIFICATION

(11) **EP 3 624 973 B1**
(45) Date of publication and mention of the grant of the patent: **22.11.2023**
(21) Application number: 18728763.6
(22) Date of filing: 16.05.2018
(51) Int. Cl.: B23B 39/22, B23B 41/06, B23B 39/00

(54) **MACHINE FOR FLARING HOLES IN DIAPHRAGMS OF HEAT EXCHANGERS**
MASCHINE ZUM AUFWEITEN VON LÖCHERN IN MEMBRANEN VON WÄRMETAUSCHERN
MACHINE DESTINÉE À ÉVASER DES TROUS DANS DES DIAPHRAGMES D'ÉCHANGEURS THERMIQUES

(30) Priority: 19.05.2017 IT 201700054570
(43) Date of publication of application: 25.03.2020
(73) Proprietor: Maus Italia S.P.A., 26010 Bagnolo Cremasco (CR) (IT)
(72) Inventor: AGOSTINO, Stefano, 26013 Crema (IT); BETTINELLI, Angelo, 26010 Capergnanica (IT)
(74) Representative: Mari, Marco Giovanni
(86) International application number: PCT/IT2018/050085
(87) International publication number: WO 2018/211543

(56) References cited:
- AU-A4- 2016 101 633
- FR-A- 1 298 278
- JP-A- H0 631 511
- US-A- 4 147 462

## Description

### Field of application

The invention relates to the mechanical engineering sector.

More in detail, the invention relates to a machine for flaring holes in diaphragms of heat exchangers adapted to support tube bundles.

### State of the art

Diaphragms, or tube plates, are perforated circular plates adapted to support the tubes of the tube bundles to prevent them from bending, keeping them parallel to one another.

During assembly, each tube is provided with a guide tip, is aligned and positioned in axis with the selected hole of the tube plate, and is pushed manually inside all the holes of all the diaphragms placed in succession.

To facilitate the step of centering and of inserting the tubes into the holes, these holes must be flared, i.e., the sharp edge that is created with the face of the diaphragm during boring must be bevelled.

It is therefore necessary for flaring of each hole to be carried out at least on the side of the diaphragm from which insertion of the tubes takes place.

Besides reducing friction during assembly of the tube bundle, flaring prevents the tubes, during normal vibration caused by the flow of fluid that hits them, from impacting against sharp edges that could damage them.

Moreover, flaring of the holes is useful to offset any dilations of the diaphragms, which could, by reducing the diameter of the single holes, narrow the tubes reducing their section.

Conventionally, flaring is carried out manually, using a vertical drill press, controlled by an operator who is positioned above each diaphragm and acts on each single hole from above, with considerable approximation and lack of uniformity in the operations. Moreover, the operation is particularly lengthy and onerous for the operator.

There are also known two-axis machining centers, to perform these flaring operations automatically.

These machines substantially comprise a working head, mounted on a vertical slide guided according to two axes horizontal and orthogonal to each other.

This working head consists of a moving block housing the tool, which, by rotating, is pushed pneumatically along its axis, toward the hole to be worked, then returning to its initial position at the end of the step and thus proceeding automatically for the whole framework of holes.

The diaphragm to be worked is thus kept fixed in position on a backing plane, while only the working head moves over it.

Document US 4 147 462 A discloses a machine for flaring holes in diaphragms of heat exchangers according to the preamble of claim 1 with a single working head as described above.

Also these machines have some limits and disadvantages.

As flaring takes place in a subsequent step to boring, a significant problem in the flaring process of the holes carried out using conventional machines is the difficulty of offsetting any misalignments of the holes made with respect to their theoretical design pitch.

Although bored with extreme precision, the holes of each diaphragm are not always perfectly aligned with and equidistant from one another, due to the tolerances of the boring machine tool. Therefore, setting a theoretical operating pitch on a flaring machine does not allow any misalignments of the holes to be taken into account, with the risk of imprecise and non-homogeneous working of the holes along their circumference, thus with only an arc thereof being flared.

Unfavourably, the working head that is raised and lowered in a vertical plane and moves simultaneously along two orthogonal directions is subject to vibrations that affect the diaphragm during flaring.

This also causes longer working times, due to the need to fix the diaphragm accurately and firmly to the backing plane to attempt to minimize the risk of misalignment between working head and holes, as well as the vibrations.

A further drawback derives from the risk of warping the diaphragms, of large size, while the working head is operating thereon, during penetration of the tip of the spindle into the hole. This warping would also cause the geometry of the flaring to be incorrect.

### Presentation of the invention

The invention aims to overcome these limits, defining a machine for flaring holes in diaphragms that is self-centering and that offsets any misalignments of the holes with respect to their theoretical design pitch, as well as ensuring precise flaring of all the holes,
Another object of the invention is to provide a precise, fast and stable machine that is not subject to vibrations and is easy to set up and use.

These objects are achieved with the machine for flaring holes in diaphragms of heat exchangers according to claim 1 comprising:
- a first ground support frame, having a main direction of extension, adapted to support a diaphragm on a plane;
- a first working head, comprising a first flaring tool, provided with rotation movement around its vertical axis, and vertical translation means for said first flaring tool;
- a second frame adapted to support said first working head so that this latter is mobile with respect thereto;
- motor means for driving said machine;
- a control unit,

wherein said first working head comprises tilting means for said first flaring tool, adapted to allow an angular deviation movement with respect to a hub belonging to the vertical axis of rotation of said first flaring tool, when said tool touches said diaphragm to be inserted into one of said holes,
characterized in that said machine comprises a second working head comprising:
   - a second flaring tool provided with rotation movement around its vertical axis and vertical translation means for said second flaring tool,
   - tilting means for said second flaring tool adapted to allow an angular deviation movement with respect to a hub belonging to the vertical axis of rotation of said second flaring tool, when said second flaring tool touches said diaphragm to be inserted into one of said holes,
wherein said second working head is situated on the opposing side with respect to said first working head and to said plane.

According to a first preferable aspect of the invention:
- said second frame comprises an upper guide beam for said first working head, placed transversely with respect to the main direction of extension of said first frame;
- said first working head comprises motor means adapted to allow said first working head to slide linearly and reversibly along said upper guide beam.

In particular:
- said second frame comprises a lower guide beam for said second working head, placed transversely with respect to the main direction of extension of said first frame;
- said second working head comprises motor means adapted to allow said second working head to slide linearly and reversibly along said lower guide beam.

Advantageously:
- said first and said second working head each comprise a stop collar for said first and said second flaring tool respectively;
- said machine comprises backing means adapted to cooperate with said stop collars to keep said diaphragm in position during the penetration of said first and second flaring tools into the respective hole of the diaphragm.

According to further preferable aspects of the invention:
- said first and said second working head each comprise a pneumatic gripping cylinder adapted to impart to the respective stop collar a vertical translation movement coordinated with the vertical translation movement of said first and said second flaring tool;
- said backing means comprise a backing beam, placed transversely with respect to said main direction of extension of said first frame and parallel to said upper guide beam and said lower guide beam.
- said backing beam comprises a slot to allow the passage of said second flaring tool of said second working head.
- said first and said second flaring tool each comprise a spindle and a shaped flaring bit, and said tilting means comprise an articulated joint provided between said spindle and said shaped bit.

In a preferred variant of the invention, said tilting means are selectively activated by means of locking means of said articulated joint.

In particular, said locking means comprise a cylinder, coaxial to said working tool, provided with a truncated cone portion, and spheres placed radially near said shaped bit contained in the truncated cone portion of said cylinder, where the vertical lowering of the truncated cone portion of said cylinder causes the convergence of said spheres against the shaped bit thereby blocking its tilting movement.

Advantageously, said first and said second working head comprise means for regulating the maximum working depth of said first and said second flaring tool with respect to the thickness of said diaphragm.

According to further preferable aspects of the invention, said machine comprises movement means for said diaphragm along said main direction of extension of said first frame.

In particular, said movement means comprise:
- a roller plane;
- a pusher, placed upstream of said first working head;
- a tie rod, placed downstream of said first working head;
- a first rail and a second rail, provided on said roller plane along said main direction of extension of said first frame, within which said pusher and said tie rod respectively can slide.

Advantageously, said pusher and said tie rod comprise pins adapted to reversibly occupy corresponding centering holes on a diaphragm, to create a stable connection between movement means and diaphragm, and to allow the advancement of said diaphragm along said main direction of extension of said first frame.

The invention has numerous advantages set forth below.

The main advantage of the invention consists in the greater precision with which the flaring of the holes of the diaphragms are performed: the tilting means of said flaring tool allow an angular deviation movement thereof with respect to a hub belonging to its vertical axis of rotation and of work and therefore its self-centering in the hole, offsetting any misalignment of the hole with respect to the theoretical design pitch at which the machine head operates.

The tilting movement to which the tool is subjected ensures that the whole of the circumference of the hole is uniformly flared by the same amount: there is no longer the risk of only a section of the circumference of the hole being worked.

Therefore, the flaring operation obtained is more precise.

Advantageously, said tilting means are selectively activated: in particular, when flaring is to be performed on half holes (i.e., holes placed along the circumference of the diaphragm and therefore open), the tool must work perpendicularly, its angular deviation movement must not be permitted because, as there is no closed circumference of the hole to contain it, it would tend to stray too far from the vertical. Said locking means ensure that the tool works only rotating around its own vertical axis, descending perpendicularly on the diaphragm.

The machine is designed so that said first working head, and when present also said second working head, only move along one direction, while the diaphragm advances along the direction orthogonal thereto: this ensures greater stability of the machine, which is less subject to vibrations and consequently better performance from the point of view of flaring precision.

Advantageously, cooperation between the stop collars of said first and second working head and said backing means ensures that the diaphragm is kept in stable position during flaring, while the respective tools penetrate into the hole.

This cooperation is a sort of gripping of the diaphragm in the working zone and eliminates the possibility of any curving or warping of the diaphragm causing imprecise working of the holes.

Advantageously, the movement means that advance the diaphragms along a main direction of extension of the machine comprise a pusher and a tie rod, that cooperate stably with the diaphragm accompanying it under the first working head, also contributing to keeping the diaphragm in place along the first frame of the machine.

Advantageously, the presence of two opposed working heads, situated on opposing sides of said diaphragm, allows two flarings to be performed simultaneously, whether flarings of a same hole, but on different faces of the diaphragm, or flarings of two different aligned holes.

Even more advantageously, the beam acting as backing means for the stop collar of the first working head is slotted to allow the passage, from the bottom toward the top, of the stop collar and of the tool of the second working head placed under the diaphragm.

Means for regulating the maximum working depth of said working tool and sensors for regulating the vertical translation means of the various components ensure correct operation of the machine and optimization of all the working steps.

### Brief description of the drawings

The advantages of the invention will be more apparent below in the description of a preferred embodiment, provided by way of nonlimiting example, and with the aid of the drawings wherein:
Figs. 1 and 2 illustrate, in an axonometric view, a machine for flaring holes in diaphragms of heat exchangers according to the invention, in two steps of working;
Figs. 3 and 4 illustrate, respectively in a top plan view and in a side view, the machine in the step of Fig. 2.
Fig. 5 illustrates, in an axonometric view, a detail of a component of the machine;
Figs. 6a and 6b illustrate, respectively in a partial vertical section and in a side view, a detail of a component of the machine;
Figs. 7 and 8 illustrate, respectively in an axonometric view and in a section along a vertical plane, a component of the machine, i.e., said first working head, according to a possible variant of the invention;
Fig. 9 illustrates, in a vertical section, a particular detail of Fig. 8;
Figs. 10 and 11 illustrate, respectively in an axonometric view and in a section along a vertical plane, a further component of the machine, i.e., said second working head, according to a possible variant of the invention.

### Detailed description of a preferred embodiment of the invention

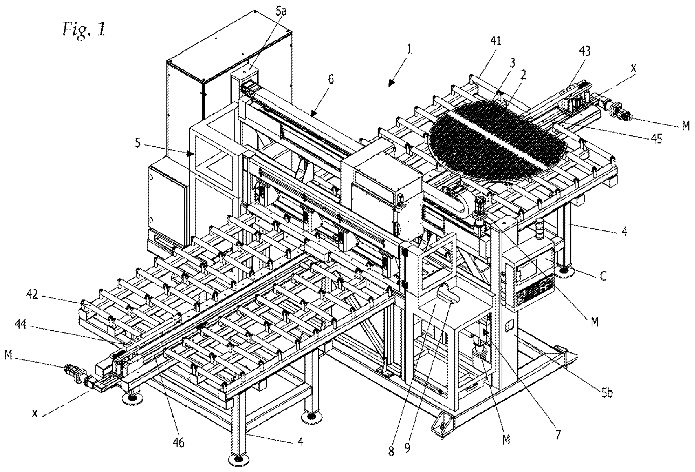

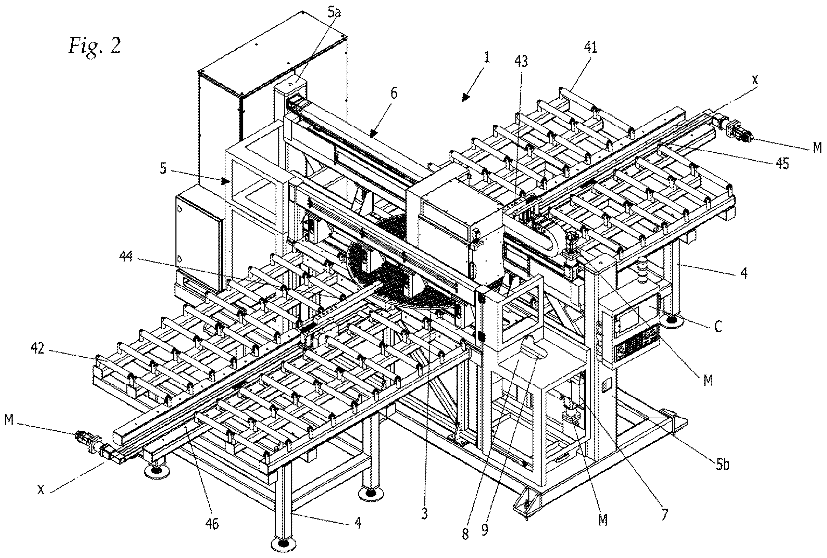

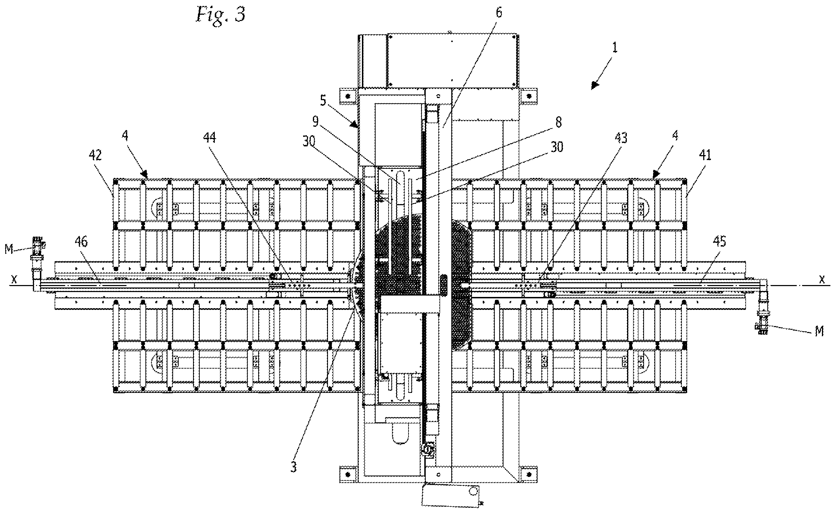

With reference to Figs. 1-4, there is illustrated a machine 1 for flaring holes 2 in diaphragms 3 used in heat exchangers, divided into three working zones, placed in sequence along a main direction of extension x.

In particular, there is identified:
- a first loading zone Z1 of the diaphragms 3 to be worked;
- a second working zone Z2 of each single diaphragm 3;
- a third unloading zone Z3 of the worked diaphragms 3, i.e., with the holes 2 flared.

Said machine 1 essentially comprises:
- a first ground support frame 4, adapted to support one of said diaphragms 3 on a horizontal plane during all the working steps;
- a first working head 10, comprising a first flaring tool 11, provided with rotation movement around its vertical axis y1, and vertical translation means for said first flaring tool 11;
- a second working head 20, comprising a second flaring tool 21 provided with rotation movement around its vertical axis y2 and vertical translation means for said second flaring tool 21;
- a second frame 5, comprising two load bearing columns 5a, 5b fixed to the ground, adapted to support said first 10 and second 20 working head so that they are mobile with respect thereto;
- motor means M for driving said machine;
- a control unit C.

Said first frame 4 has a main direction of extension x, while said second frame 5 comprises an upper guide beam 6 and a lower guide beam 7, placed orthogonally with respect to said main direction of extension x and stably associated with said load-bearing columns 5a, 5b.

Said first working head 10 and said second working head 20 comprise motor means M1, M2 adapted to allow them to slide linearly and reversibly along said upper 6 and lower 7 guide beams respectively, so as to move transversely to the main direction x of said machine 1.

Hereinafter in the description, said first working head 10 can also be called upper head; likewise, said second working head 20 can also be called lower head.

Said machine 1 comprises movement means for one of said diaphragms 3 along said main direction of extension x, in particular along said first frame 4, so that each diaphragm 3 passes from the loading zone Z1 to the working zone Z2, to the unloading zone Z3.

Said movement means comprise a first 41 and a second 42 idle roller plane on which the diaphragm 3 is advanced.

To be able to move the diaphragm 3 along said roller planes 41, 42, said movement means comprise:
- a pusher 43, placed upstream of said working heads 10, 20;
- a tie rod 44, placed downstream of said working heads 10, 20;
- a first rail 45 and a second rail 46, provided on said first 41 and said second 42 roller plane, along said main line of extension x, within which said pusher 43 and said tie rod 44 respectively can slide.

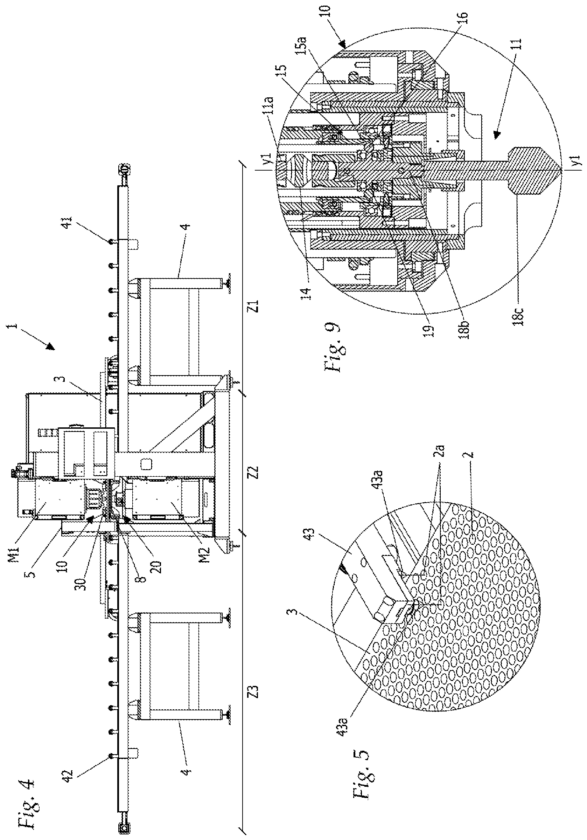

As illustrated in Fig. 5, both said pusher 43 and said tie rod 44 comprise pins 43a, 44a adapted to reversibly occupy corresponding centering holes 2a on said diaphragm 3, to create a stable connection between said movement means 43, 44 and said diaphragm 3 being worked, and to allow the advancement thereof on said roller planes 41, 42 between said working heads 10, 20.

Said pins 43a, 44a also act as reference point for drafting the working sequence of the diaphragm 3: the control unit C, as a function of the holes selected by the operator as centering holes 2a, records the coupling position of the pins 43a, 44a in the centering holes as "zero" position and sets the mode of advancement of the diaphragm 3.

Said pusher 43 and said tie rod 44 remain coupled to the diaphragm 3 substantially during the working of all the holes 2, with the exception of, for obvious reasons of dimensions, the working of the edge holes near the centering holes.

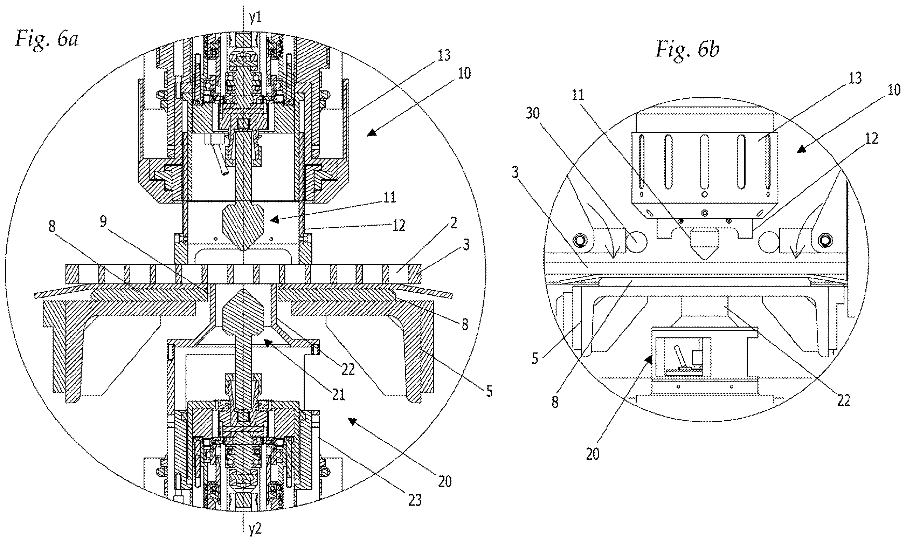

With reference to Figs. 6a and 6b, said machine 1 comprises backing means adapted to cooperate with a portion of said first 10 and of said second 20 working head to keep said diaphragm 3 in position during the penetration of the flaring tools 11, 21 into the respective holes 2 to be flared.

In particular, said first 10 and said second 20 working head each comprise a stop collar 12, 22 for the respective flaring tools 11, 21, and said backing means comprise a beam 8, placed transversely with respect to said main direction of extension x and parallel to said upper 6 and lower 7 guide beams.

Said backing beam 8 is placed at the same height as the roller planes 41, 42 for advancement of the diaphragm 3.

Said backing beam 8 acts as support for the diaphragm 3 and offers a counter-pressure to the pressing force imparted by said first working head 10.

As is particularly evident from the section of Fig. 6a, said backing beam 8 comprises a longitudinal slot 9 to allow the passage, from the bottom toward the top, of the stop collar 22 and of the flaring tool 21 of the second working head 20 placed under the support plane of the diaphragm 3.

With reference to the lateral view of Fig. 6b, said machine 1 comprises gripping bars 30, positioned above and along said backing beam 8, adapted to keep said diaphragm 3 in position during the flaring operations. In particular, said gripping bars 30 act on the diaphragm 3 keeping it pressed on said backing beam 8. Therefore, the gripping bars 30 have the purpose of preventing any vibrations during the operations.

Said gripping bars 30 are rotatingly associated with said second frame 5 of said machine 1 so that they can be raised and lowered on the diaphragm 3 as a function of its passage and of the working steps of the machine 1. Advantageously, said gripping bars 30 comprise a pressure switch that verifies their gripping position on the diaphragm 3 and is coordinated with said control unit C to control said working heads 10, 20.

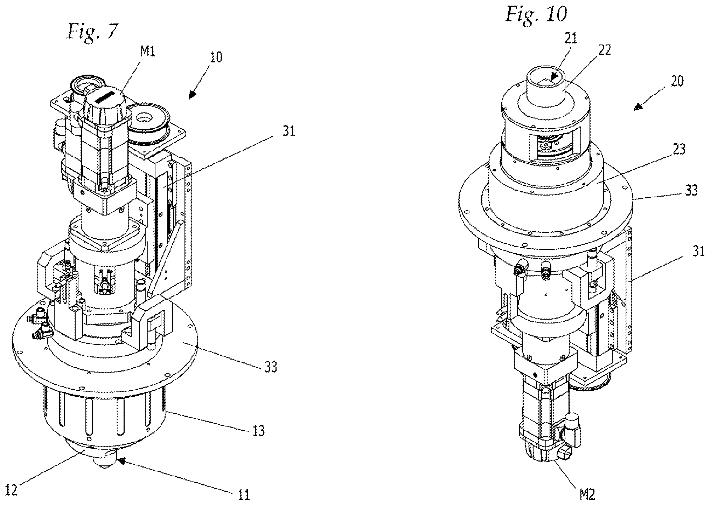

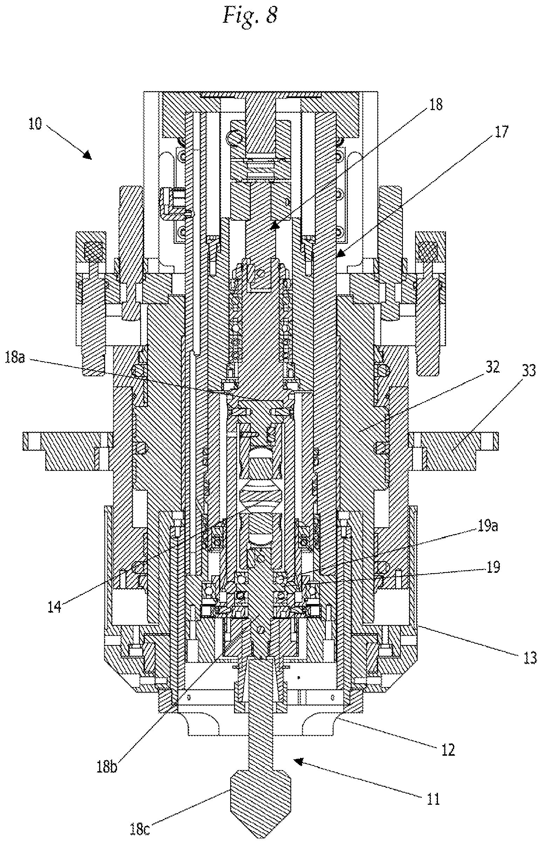

With particular reference to Figs. 7-9, there is instead illustrated said first working head 10, i.e., the working head sliding on the upper guide beam 6 of said second frame 5, through a carriage with which said working head 10 is associated by means of a flange 33.

Said first working head 10 essentially comprises:
- a flaring tool 11 consisting of a spindle 18 adapted to rotate around its vertical axis;
- a cylinder 17, defined "spindle cylinder" in technical jargon, adapted to allow the vertical translation of said flaring tool;

- a stop collar 12;
- means for regulating the maximum working depth of said flaring tool with respect to the thickness of said diaphragm 3;
- sensors for regulating the vertical translation means of said flaring tool 11, of said stop collar 12 and of said cylinder 17.

Said spindle 18 consists of three elements connected to one another: an end 18a, a tool shaft 18b and a shaped flaring bit 18c.

Interposed between said end 18a and said tool shaft 18b are tilting means, adapted to allow an angular deviation movement of the flaring tool with respect to a hub belonging to the vertical axis y1 of rotation thereof.

### In fact, said tilting means comprise an articulated joint 14.

In particular, the end 18a, integral with the spindle, is inserted into the rear part of said articulated joint 14.

The rotary motion of the spindle 18 is transmitted, from the end 18a to the articulated joint 14, by means of the spheres inserted into specific seats obtained on the end that allow the articulated joint 14 to move linearly along the longitudinal axis y1 of the whole tool 11.

The articulated joint 14 is in turn connected integral with the tool shaft 18b.

A shoulder 19 is obtained on the tool shaft 18b, acting on which are two sliding elements 19a, of the thrust bearing or bushing type, which axially constrain the tool shaft but allow a tilting movement through the combined action of the articulated joint 14 and of the spheres interposed between the end and the articulated joint.

Said tilting means are selectively activated by means of locking means of said articulated joint 14 (illustrated in detail in Fig. 9).

Said locking means comprise a piston 15, coaxial to said working tool 11, provided with a truncated cone portion 15a, and spheres 16 placed radially in specific seats obtained on the tool shaft 18b near said shaped bit, contained in the truncated cone portion 15a of said piston 15, where the vertical lowering of the truncated cone portion 15a of said piston 15 causes the convergence of said spheres 16 against the shoulder 19, thereby blocking its tilting movement.

Said means for regulating the maximum working depth of said flaring tool 11 with respect to the thickness of said diaphragm 3 comprise a screw and a lead screw 31. The clockwise or counterclockwise rotation of the lead screw 31, operated by motor means M1 provided on the working head 10, causes raising or lowering of the spindle cylinder 17, integral with the spindle.

Said working head 10 also comprises a pneumatic gripping cylinder 32, to which the screw/lead screw 31 are connected to regulate the operating height of the flaring tool and the stop collar 12 for the backing means.

The vertical translation movement of the pneumatic gripping cylinder 32 causes the same movement of the screw/lead screw 31 and of the stop collar 12.

The height of the stop collar 12 can also be regulated manually through the rotation of an external ring nut 13, which allows a relative axial movement with respect to the piston of the pneumatic gripping cylinder 32.

In the variant of the machine illustrated in the figures, the machine comprises two working heads 10, 20, situated opposed with respect to the support plane of the diaphragm 3, so as to be able to operate simultaneously on both faces of the diaphragm.

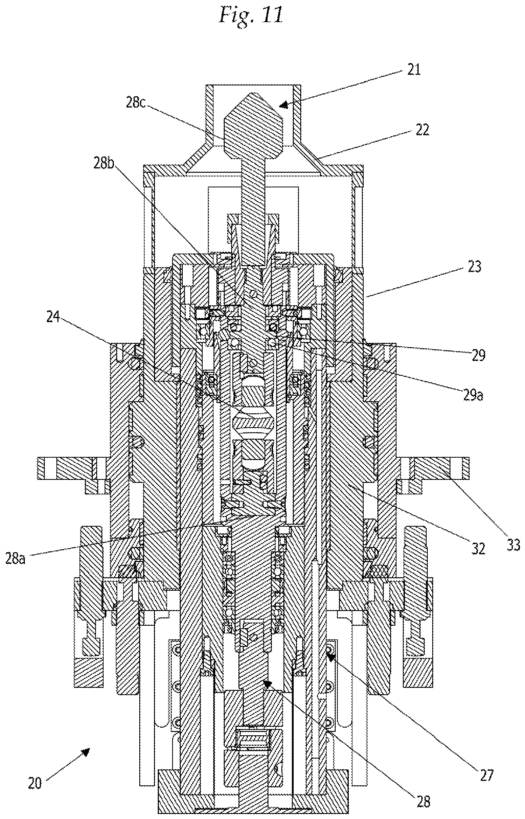

Also said second working head 20 (Figs. 10 and 11) substantially comprises:
- a flaring tool 21 provided with rotation movement around its vertical axis y2 and vertical translation means for said flaring tool,
- tilting means for said flaring tool 21 adapted to allow an angular deviation movement with respect to a hub belonging to its vertical axis y2 of rotation.

All the components of said second working head are the same as described for the first working head, with the exception that the stop collar 22 of said second working head 20 is at a fixed height, as the distance from the diaphragm 3 is always the same (and not as a function of its thickness). Therefore, said second working head 20 does not comprise the means for manual regulation of the stop collar 22.

Different operating modes of the machine according to the invention are described below.

The first setting operations to perform on the machine 1 are resetting and regulating the heights of the components of said first working head 10, and comprise the steps of:
- regulating the lowering height of the stop collar 12 by means of the pneumatic gripping cylinder 32 and the adjustment ring nut 13 as a function of the thickness of the diaphragm 3;
- disengaging the tool 11 of the upper head 10 through operation of its spindle cylinder 17.

Resetting the lowering height of the flaring tool 11 as a function of the geometry of the bevel of the hole takes place automatically controlled by the control unit C.

Said second working head 20 does not require any regulation.

The machine 1 according to the invention can operate according to two different modes: alternated flaring cycle of a same hole (first upper head then lower head); simultaneous flaring cycle of adjacent holes (upper head and lower head simultaneously, but not on the same hole to avoid interference between the flaring tips).

In particular, the alternated flaring cycle of a same hole comprises the steps of:
- positioning the lower 20 and upper 10 head in axis with a same hole 2 to be worked;
- gripping with the upper 10 and lower 20 head;
- flaring with the upper head 10;
- disengaging the tool 11 of the upper head 10;
- flaring with the lower head 20;
- disengaging the tool 21 of the lower head 20;
- disengaging from gripping of the upper 10 and lower head 20.

Alternatively, the simultaneous flaring cycle of adjacent holes comprises the steps of:
- positioning the lower 20 and upper 10 head in axis with two adjacent holes 2 to be worked;
- gripping with the upper 10 and lower 20 head;
- simultaneous flaring with the upper 10 and lower 20 head.

## Claims

1. Machine (1) for flaring holes (2) in diaphragms (3) of heat exchangers, comprising:
- a first ground support frame (4), having a main direction of extension (x), adapted to support a diaphragm (3) on a plane (41, 42);
- a first working head (10), comprising a first flaring tool (11), provided with rotation movement around its vertical axis (y1), and vertical translation means for said first flaring tool (11);
- a second frame (5) adapted to support said first working head (10) so that the latter is mobile with respect thereto;
- motor means (M) for driving said machine (1);
- a control unit (C),
wherein said first working head (10) comprises tilting means for said first flaring tool (11), adapted to allow an angular deviation movement with respect to a hub belonging to the vertical axis (y1) of rotation of said first flaring tool (11), when said first flaring tool (11) touches said diaphragm (3) to be inserted into one of said holes (2),
**characterized in that** said machine (1) comprises a second working head (20) comprising:
- a second flaring tool (21) provided with rotation movement around its vertical axis (y2) and vertical translation means for said second flaring tool (21);
- tilting means for said second flaring tool (21) adapted to allow an angular deviation movement with respect to a hub belonging to the vertical axis (y2) of rotation of said second flaring tool (21), when said second flaring tool (21) touches said diaphragm (3) to be inserted into one of said holes (2),
wherein said second working head (20) is situated on the opposing side with respect to said first working head (10) and to said plane (41).

2. Machine (1) according to claim 1, **characterized in that**:
- said second frame (5) comprises an upper guide beam (6) for said first working head (10), placed transversely with respect to the main direction of extension (x) of said first frame (4);
- said first working head (10) comprises motor means (M1) adapted to allow said first working head (10) to slide linearly and reversibly along said upper guide beam (6).

3. Machine (1) according to claim 1, **characterized in that**:
- said second frame (5) comprises a lower guide beam (7) for said second working head (20), placed transversely with respect to the main direction of extension (x) of said first frame (4);
- said second working head (20) comprises motor means (M2) adapted to allow said second working head (20) to slide linearly and reversibly along said lower guide beam (7).

4. Machine (1) according to claim 1, **characterized in that**:
- said first (10) and said second (20) working head each comprise a stop collar (12, 22) for said first (11) and said second (21) flaring tool respectively;
- said machine (1) comprises backing means (8) adapted to cooperate with said stop collars (12, 22) to keep said diaphragm (3) in position during the penetration of said first (11) and second (21) flaring tools into the respective hole (2) of the diaphragm (3).

5. Machine (1) according to claim 4, **characterized in that** said first (10) and said second (20) working head each comprise a pneumatic gripping cylinder (13, 23) adapted to impart to the respective stop collar (12, 22) a vertical translation movement coordinated with the vertical translation movement of said first (11) and said second (21) flaring tool.

6. Machine (1) according to claim 4, **characterized in that** said backing means comprise a backing beam (8), placed transversely with respect to said main direction of extension (x) of said first frame (4) and parallel to said upper guide beam (6) and said lower guide beam (7).

7. Machine (1) according to claim 6, **characterized in that** said backing beam (8) comprises a slot (9) to allow the passage of said second flaring tool (21) of said second working head (20).

8. Machine (1) according to claims 1, **characterized in that** said first (11) and said second (21) flaring tool each comprise a spindle (18, 28) and a shaped flaring bit (18c, 28c), and said tilting means comprise an articulated joint (14, 24) provided between said spindle (18, 28) and said shaped bit (18c, 28c).

9. Machine (1) according to claim 8, **characterized in that** said titling means are selectively activated by means of locking means (15, 25, 16, 26) for said articulated joint (14, 24).

10. Machine (1) according to claim 9, **characterized in that** said locking means comprise a cylinder (15, 25), coaxial to said working tool (11, 21), provided with a truncated cone portion (15a, 25a), and spheres (16, 26) placed radially near said shaped bit (18c, 28c) contained in the truncated cone portion (15a, 25a) of said cylinder (15, 25), where the vertical lowering of the truncated cone portion (15a, 25a) of said cylinder (15, 25) causes the convergence of said spheres (16, 26) against the shaped bit (18c, 28c) thereby blocking its tilting movement.

11. Machine (1) according to claim 1, **characterized in that** said first (10) and said second (20) working head comprise means for regulating the maximum working depth of said first (11) and said second (21) flaring tool with respect to the thickness of said diaphragm (3).

12. Machine (1) according to claim 1, **characterized in that** it comprises movement means for said diaphragm (3) along said main direction of extension (x) of said first frame (4).

13. Machine (1) according to claim 12, **characterized in that** said movement means comprise:
- a roller plane (41, 42);
- a pusher (43), placed upstream of said first working head (10);
- a tie rod (44), placed downstream of said first working head (10);
- a first rail (45) and a second rail (46), provided on said roller plane (41, 42) along said main direction of extension (x) of said first frame (4), within which said pusher (43) and said tie rod (44) respectively can slide.

14. Machine (1) according to claim 13, **characterized in that** said pusher (43) and said tie rod (44) comprise pins (43a, 44a) adapted to reversibly occupy corresponding centering holes (2a) on a diaphragm (3), to create a stable connection between movement means and diaphragm (3), and to allow the advancement of said diaphragm (3) along said main direction of extension (x) of said first frame (4).

## Patentansprüche

1. Maschine (1) zum Aufweiten von Löchern (2) in Membranen (3) von Wärmetauschern, umfassend:
- einen ersten Bodenstützrahmen (4) mit einer Haupterstreckungsrichtung (x), geeignet, um eine Membrane (3) auf einer Fläche (41, 42) zu stützen;
- einen ersten Arbeitskopf (10), umfassend ein erstes Aufweitungswerkzeug (11), das mit einer Drehbewegung um seine vertikale Achse (y1) versehen ist, und vertikale Translationsmittel für das besagte erste Aufweitungswerkzeug (11);
- einen zweiten Rahmen (5), geeignet, um den besagten ersten Arbeitskopf zu stützen, so dass letzterer in Bezug uf diesen beweglich ist;
- Motormittel (M) für den Antrieb der besagten Maschine (1);
- eine Steuereinheit (C),
wobei der besagte erste Arbeitskopf (10) Kippmittel für das besagte erste Aufweitungswerkzeug (11) umfasst, geeignet, um eine Winkelabweichungsbewegung in Bezug auf einen zur vertikalen Drehachse (y1) des besagten ersten Aufweitungswerkzeugs (11) gehörenden Drehpunkt zu ermöglichen, wenn das besagte erste Aufweitungswerkzeug (13) die besagte Membrane (3) berührt, die in eines der besagten Löcher (2) eingeführt werden soll,
**dadurch gekennzeichnet, dass** die besagte Maschine (1) einen zweiten Arbeitskopf (20) umfasst, der Folgendes umfasst:
- ein zweites Aufweitungswerkzeug (21), das mit einer Drehbewegung um seine vertikale Achse (y2) und vertikalen Translationsmitteln für das besagte zweite Aufweitungswerkzeug (21) versehen ist;
- Kippmittel für das besagte zweite Aufweitungswerkzeug (21), geeignet, um eine Winkelabweichungsbewegung in Bezug auf einen zur vertikalen Drehachse (y2) des besagten zweiten Aufweitungswerkzeugs (21) gehörenden Drehpunkt zu ermöglichen, wenn das besagte zweite Aufweitungswerkzeug (21) die besagte Membrane (3) berührt, die in eines der besagten Löcher (2) eingeführt werden soll,
wobei der besagte zweite Arbeitskopf (20) auf der gegenüberliegenden Seite in Bezug auf den besagten ersten Arbeitskopf (10) und auf die besagte Fläche (41) gelegen ist.

2. Maschine (1) gemäß Anspruch 1, **dadurch gekennzeichnet, dass**:
- der besagte zweite Rahmen (5) einen oberen Führungsträger (6) für den besagten ersten Arbeitskopf (10) umfasst, der quer in Bezug auf die Hauptausdehnungsrichtung (x) des besagten ersten Rahmens (4) angeordnet ist);
- der besagte erste Arbeitskopf (10) Motormittel (M1) umfasst, geeignet, um den besagten ersten Arbeitskopf (10) linear und reversibel längs des besagten oberen Führungsträgers (6) gleiten zu lassen.

3. Maschine (1) gemäß Anspruch 1, **dadurch gekennzeichnet, dass**:
- der besagte zweite Rahmen (5) einen unteren Führungsträger (7) für den besagten zweiten Arbeitskopf (20) umfasst, der quer in Bezug auf die Hauptausdehnungsrichtung (x) des besagten ersten Rahmens (4) angeordnet ist;
- der besagte zweite Arbeitskopf (20) Motormittel (M2) umfasst, geeignet, den besagten zweiten Arbeitskopf (20) linear und reversibel längs des besagten unteren Führungsträgers (7) gleiten zu lassen.

4. Maschine (1) gemäß Anspruch 1, **dadurch gekennzeichnet, dass**:
- der besagte erste (10) und der besagte zweite (20) Arbeitskopf jeweils einen Anschlagkragen (12, 22) für das besagte erste (11) bzw. das besagte zweite (21) Aufweitungswerkzeug umfassen;
- die besagte Maschine (1) Stützmittel (8) umfasst, geeignet, um mit den besagten Anschlagkragen (12, 22) zusammenzuwirken, um die besagte Membrane (3) während des Eindringens des besagten ersten (11) und zweiten (21) Ausweitungswerkzeugs in das jeweilige Loch (2) der Membrane (3) in Position zu halten.

5. Maschine (1) gemäß Anspruch 4, **dadurch gekennzeichnet, dass** der besagte erste und der besagte zweite (20) Arbeitskopf jeweils einen pneumatischen Greifzylinder (13, 23) umfassen, geeignet, um dem jeweiligen Anschlagkragen (12, 22) eine vertikale Translationsbewegung zu erteilen, die mit der vertikalen Translationsbewegung des besagten ersten (11) und des besagten zweiten (21) Ausweitungswerkzeugs koordiniert ist.

6. Maschine (1) gemäß Anspruch 4, **dadurch gekennzeichnet, dass** die besagten Stützmittel einen Stützbalken (8) umfassen, der quer zur Hauptausdehnungsrichtung (x) des besagten ersten Rahmens (4) und parallel zu dem besagten oberen Führungsträger (6) und dem besagten unteren Führungsträger (7) angeordnet ist.

7. Maschine (1) gemäß Anspruch 6, **dadurch gekennzeichnet, dass** der besagte Stützbalken (8) einen Einschnitt (9) umfasst, um den Durchgang des besagten zweiten Aufweitungswerkzeugs (21) des besagten zweiten Arbeitskopfes (20) zu ermöglichen.

8. Maschine (1) gemäß Anspruch 1, **dadurch gekennzeichnet, dass** das besagte erste und das besagte zweite (21) Aufweitungswerkzeug jeweils eine Spindel (18, 28) und einen geformten Aufweitungsmeißel (18c, 28c) umfassen, und die besagten Kippmittel eine Gelenkkupplung (14, 24) umfassen, die zwischen der besagten Spindel (18, 28) und dem besagten geformten Meißel (18c, 28c) vorgesehen ist.

9. Maschine (1) gemäß Anspruch 8, **dadurch gekennzeichnet, dass** die besagten Kippmittel selektiv mit Hilfe von Verriegelungsmitteln (15, 25, 16, 26) für die besagte Gelenkkupplung (14, 24) aktiviert werden.

10. Maschine (1) gemäß Anspruch 9, **dadurch gekennzeichnet, dass** die besagten Verriegelungsmittel einen zu dem besagten Arbeitswerkzeug (11, 21) koaxialen Zylinder (15, 25) umfassen, der mit einem kegelstumpfförmigen Abschnitt (15a, 25a) versehen ist, und Kugeln (16, 26), die radial in der Nähe des besagten geformten Meißels (18c, 28c) angeordnet sind, der in dem kegelstumpfförmigen Abschnitt (15a, (15a, 25a) des besagten Zylinders (15, 25) enthalten ist, wobei das vertikale Absenken des kegelstumpfförmigen Abschnitts (15a, 25a) des besagten Zylinders (15, 25) die Annäherung der besagten Kugeln (16, 26) gegen den geformten Meißel (18c, 28c) bewirkt, wodurch dessen Kippbewegung blockiert wird.

11. Maschine (1) gemäß Anspruch 1, **dadurch gekennzeichnet, dass** der besagte erste (10) und der besagte zweite (20) Arbeitskopf Mittel zum Einstellen der maximalen Arbeitstiefe des besagten ersten (11) und des besagten zweiten (21) Ausweitungswerkzeugs in Bezug auf die Dicke der besagten Membrane (3) umfassen.

12. Maschine (1) gemäß Anspruch 1, **dadurch gekennzeichnet, dass** sie Mittel zur Bewegung der besagten Membrane (3) längs der besagten Haupterstreckungsrichtung (x) des besagten ersten Rahmens (4) umfasst.

13. Maschine (1) gemäß Anspruch 12, **dadurch gekennzeichnet, dass** die besagten Bewegungsmittel Folgendes umfassen:
- eine Rollenfläche (41,42);
- einen Schieber (43), der stromaufwärts des besagten ersten Arbeitskopfes (10) angeordnet ist;
- eine Zugstange (44), die stromabwärts des besagten ersten Arbeitskopfes (10) angeordnet ist;
- eine erste Schiene (45) und eine zweite Schiene (46), die auf der besagten Rollenfläche (41, 42) längs der besagten Haupterstreckungsrichtung (x) des besagten ersten Rahmens (4) vorgesehen sind, in dem der besagte Schieber (43) bzw. die Zugstange (44) gleiten können.

14. Maschine (1) gemäß Anspruch 13, **dadurch gekennzeichnet, dass** der besagte Schieber (43) und die besagte Zugstange (44) Stifte (43a, 44a) umfassen, geeignet, entsprechende Zentrierlöcher (2a) auf einer Membrane (3) reversibel zu besetzen, um eine stabile Verbindung zwischen Bewegungsmitteln und Membrane (3) zu schaffen und die Vorwärtsbewegung der besagten Membrane (3) längs der besagten Haupterstreckungsrichtung (x) des besagten ersten Rahmens (4) zu ermöglichen.

## Revendications

1. Machine (1) destinée à évaser des trous (2) dans des diaphragmes (3) d'échangeurs thermiques, comprenant :
- un premier cadre d'appui au sol (4), ayant une direction principale d'extension (x), adapté pour supporter une membrane (3) sur un plan (41, 42) ;
- une première tête de travail (10), comprenant un premier outil d'évasement (11), pourvu d'un mouvement de rotation autour de son axe vertical (y1), et des moyens de translation verticale pour ledit premier outil d'évasement (11) ;
- un second cadre (5) adapté pour supporter ladite première tête de travail (10) de manière à ce que cette dernière soit mobile par rapport à celui-ci ;
- des moyens moteurs (M) pour l'entraînement de ladite machine (1) ;
- une unité de commande (C),
où ladite première tête de travail (10) comprend des moyens d'inclinaison pour ledit premier outil d'évasement (11), adaptés pour permettre un mouvement de déviation angulaire par rapport à un moyeu appartenant à l'axe vertical (y1) de rotation dudit premier outil d'évasement (11), lorsque ledit premier outil d'évasement (11) touche ledit diaphragme (3) à insérer dans l'un desdits trous (2),
**caractérisée par le fait que** ladite machine comprend une deuxième tête de travail (20) comprenant :
- un deuxième outil d'évasement (21) pourvu d'un mouvement de rotation autour de son axe vertical (y2) et de moyens de translation verticale pour ledit deuxième outil d'évasement (21) ;
- des moyens d'inclinaison pour ledit second outil d'évasement (21) adaptés pour permettre un mouvement de déviation angulaire par rapport à un moyeu appartenant à l'axe vertical (y2) de rotation dudit second outil d'évasement (21), lorsque ledit second outil d'évasement (21) touche ladite membrane (3) à insérer dans l'un desdits trous (2),
où ladite deuxième tête de travail (20) est située du côté opposé par rapport à ladite première tête de travail (10) et audit plan (41).

2. Machine (1) selon la revendication 1, **caractérisée par le fait que** :
- ledit deuxième cadre (5) comprend une poutre de guidage supérieure (6) pour ladite première tête de travail (10), placée transversalement par rapport à la direction principale d'extension (x) dudit premier cadre (4) ;
- ladite première tête de travail (10) comprend des moyens moteurs (M1) adaptés pour permettre à ladite première tête de travail (10) de glisser linéairement et réversiblement le long de ladite poutre de guidage supérieure (6).

3. Machine (1) selon la revendication 1, **caractérisée par le fait que** :
- ledit deuxième cadre (5) comprend une poutre de guidage inférieure (7) pour ladite deuxième tête de travail (20), placée transversalement par rapport à la direction principale d'extension (x) dudit premier cadre (4) ;
- ladite deuxième tête de travail (20) comprend des moyens moteurs (M2) adaptés pour permettre à ladite deuxième tête de travail (20) de glisser linéairement et réversiblement le long de ladite poutre de guidage inférieure (7).

4. Machine (1) selon la revendication 1, **caractérisée par le fait que** :
- ladite première (10) et ladite seconde (20) tête de travail comprennent chacune un collier d'arrêt (12, 22) pour ledit premier (11) et ledit second (21) outil d'évasement respectivement ;
- ladite machine (1) comprend des moyens d'appui (8) adaptés pour coopérer avec lesdits colliers de butée (12, 22) afin de maintenir ladite membrane (3) en position pendant la pénétration desdits premier (11) et second (21) outils d'évasement dans le trou (2) respectif de la membrane (3).

5. Machine (1) selon la revendication 4, **caractérisée par le fait que** ladite première (10) et ladite seconde (20) tête de travail comportent chacune un cylindre pneumatique de préhension (13, 23) apte à imprimer au collier de butée respectif (12, 22) un mouvement de translation verticale coordonné avec le mouvement de translation verticale dudit premier (11) et dudit second (21) outil d'évasement.

6. Machine (1) selon la revendication 4, **caractérisée par le fait que** lesdits moyens d'appui comprennent une poutre d'appui (8), placée transversalement par rapport à ladite direction principale d'extension (x) dudit premier cadre (4) et parallèlement à ladite poutre de guidage supérieure (6) et à ladite poutre de guidage inférieure (7).

7. Machine (1) selon la revendication 5, **caractérisée par le fait que** ladite poutre d'appui (8) comprend une fente (9) pour permettre le passage dudit deuxième outil d'évasement (21) de ladite deuxième tête de travail (20).

8. Machine (1) selon les revendications 1ou 3, **caractérisée par le fait que** ledit premier (11) et ledit second (21) outil d'évasement comprennent chacun une broche (18, 28) et un embout d'évasement façonné (18c, 28c), et que lesdits moyens de basculement comprennent un joint articulé (14, 24) prévu entre ladite broche (18, 28) et ledit embout façonné (18c, 28c).

9. Machine (1) selon la revendication 8, **caractérisée par le fait que** lesdits moyens de basculement sont sélectivement activés au moyen de moyens de verrouillage (15, 25, 16, 26) de ladite articulation (14, 24).

10. Machine (1) selon la revendication 9, **caractérisée par le fait que** lesdits moyens de verrouillage comprennent un cylindre (15, 25), coaxial audit outil de travail (11, 21), pourvu d'une partie tronconique (15a, 25a), et des sphères (16, 26) placées radialement à proximité dudit embout façonné (18c, 28c) contenu dans la partie tronconique (15a, 25a) dudit cylindre (15, 25), où l'abaissement vertical de la partie tronconique (15a, 25a) dudit cylindre (15, 25) provoque la convergence desdites sphères (16, 26) contre l'embout façonné (18c, 28c), bloquant ainsi son mouvement de basculement.

11. Machine (1) selon la revendication 1, **caractérisée par le fait que** ladite première (10) et ladite seconde (20) tête de travail comprennent des moyens de régulation de la profondeur de travail maximale dudit premier (11) et dudit second (21) outil d'évasement par rapport à l'épaisseur de ladite membrane (3).

12. Machine (1) selon la revendication 1, **caractérisée par le fait qu'**elle comprend des moyens de déplacement de ladite membrane (3) le long de ladite direction principale d'extension (x) dudit premier cadre (4).

13. Machine (1) selon la revendication 12, **caractérisée par le fait que** lesdits moyens de déplacement comprennent :
- un plan à rouleaux (41, 42) ;
- un poussoir (43), placé en amont de ladite première tête de travail (10) ;
- un tirant (44), placé en aval de ladite première tête de travail (10) ;
- un premier rail (45) et un second rail (46), prévus sur ledit plan à rouleaux (41, 42) le long de ladite direction principale d'extension (x) dudit premier châssis (4), à l'intérieur desquels ledit poussoir (43) et ledit tirant (44) peuvent respectivement coulisser.

14. Machine (1) selon la revendication 13, **caractérisée par le fait que** ledit poussoir (43) et ledit tirant (44) comprennent des goupilles (43a, 44a) adaptées pour occuper de manière réversible des trous de centrage correspondants (2a) sur une membrane (3), pour créer une liaison stable entre les moyens de déplacement et la membrane (3), et pour permettre l'avancement de ladite membrane (3) le long de ladite direction principale d'extension (x) dudit premier cadre (4).
